(19) Europäisches Patentamt
European Patent Office
Office européen des brevets

(11) Numéro de publication : **0 184 479**
**B1**

(12) **FASCICULE DE BREVET EUROPÉEN**

(45) Date de publication du fascicule du brevet : **09.11.88**

(51) Int. Cl.[4] : **C 07 F 7/18**

(21) Numéro de dépôt : **85402142.5**

(22) Date de dépôt : **06.11.85**

(54) **Fluorosilanes et leur procédé de préparation.**

(30) Priorité : **13.11.84 FR 8417279**

(43) Date de publication de la demande :
**11.06.86 Bulletin 86/24**

(45) Mention de la délivrance du brevet :
**09.11.88 Bulletin 88/45**

(84) Etats contractants désignés :
**AT BE CH DE FR GB IT LI LU NL SE**

(56) Documents cités :
**EP-A- 0 157 218**
**US-A- 3 794 672**
**US-A- 3 828 087**
**US-A- 3 950 588**
**CHEMICAL ABSTRACTS, vol. 100, no. 10, 5 mars 1984, page 285, réf. no. 72916j, Columbus, Ohio, US**
**CHEMICAL ABSTRACTS, vol. 93, no. 8, 25 août 1980, page 99, réf. no. 73717u, Columbus, Ohio, US**

(73) Titulaire : **ATOCHEM**
**4 & 8, Cours Michelet La Défense 10**
**F-92800 Puteaux (FR)**

(72) Inventeur : **Boutevin, Bernard**
**Les Terres Blanches 1, rue Anselme Mathieu**
**F-34000 Montpellier (FR)**
Inventeur : **Pietrasanta, Yves**
**14, Place Meril Pougade**
**F-34140 Meze (FR)**

(74) Mandataire : **Leboulenger, Jean et al**
**ATOCHEM Département Propriété Industrielle**
**F-92091 Paris la Défense 10 Cédex 42 (FR)**

**EP 0 184 479 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

**Description**

La présente invention concerne le domaine des silanes et a plus particulièrement pour objet des fluorosilanes utilisables pour la fabrication de silicones fluorés.

Les élastomères de fluorosilicones, parmi lesquels les plus couramment rencontrés sont les dérivés du poly(trifluoropropylméthyl-siloxane) de structure :

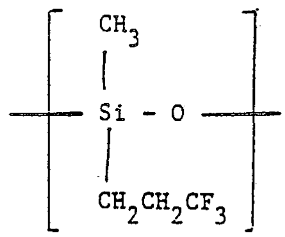

sont connus pour leur stabilité dans une large plage de température et leur excellente résistance aux agents chimiques, aux carburants, aux huiles et aux solvants. De plus, par rapport aux autres élastomères fluorés, les silicones fluorés conservent un bon niveau de propriétés aux températures extrêmes. Ces propriétés, et surtout la résistance aux solvants, proviennent de la liaison chimique carbone-fluor.

Il existe de nombreux brevets relatifs à la synthèse de silicones fluorés ou à celle de fluorosilanes utilisables pour leur préparation. Ces fluorosilanes qui portent sur un atome de silicium au moins un groupement permettant la polycondensation ultérieure (notamment un atome de chlore ou un groupe alcoxy) sont généralement obtenus par hydrosilylation d'oléfines fluorées en présence d'un catalyseur (le plus souvent l'acide hexachloroplatinique ou l'un de ses dérivés) suivant la réaction :

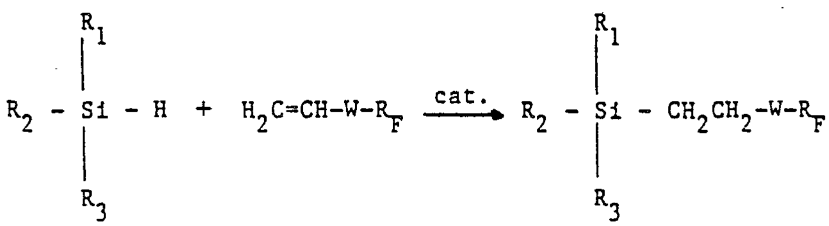


où $R_1$, $R_2$ et $R_3$ désignent des groupements dont l'un au moins permet la polycondensation ultérieure en silicone, $R_F$ désigne une chaîne fluorée et W est une liaison directe ou un groupe de liaison bivalent, par exemple un groupe éther, ester, amide, sulfonamide, uréthane, etc... (voir par exemple les brevets GB 869 343, US 3 012 006 et US 3 422 131). Malheureusement, cette réaction d'hydrosilylation est souvent difficile à mettre en œuvre, sauf dans le cas des dérivés allyliques tels que $(CF_3)_2CF—O—CH_2CH = CH_2$.

Le brevet US 3 794 672 décrit les fluorosilanes de formule :

$$R_ACH_2CH_2S\ R_BSi \sim$$

dans laquelle $R_A$ est un radical perfluoroalkyl contenant 1 à 4 atomes de carbone et $R_B$ est un radical alkylène contenant aussi 1 à 4 atomes de carbone. Ces fluorosilanes sont obtenus par réaction radicalaire d'une oléfine $R_ACH = CH_2$ sur un thiol silicié de formule :

$$HS\ R\ Si \sim$$

Le résumé Chemical Abstracts Vol. 93, 1980, page 99, n° 73717u mentionne des composés semblables au brevet US 3 794 672 mais obtenus par réaction d'un thiol fluoré sur un vinylsilane.

On a maintenant trouvé de nouveaux fluorosilanes pouvant être représentés par la formule générale :

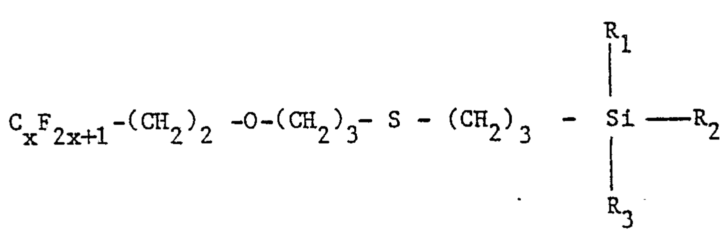 (I)

dans laquelle $R_1$ représente un atome de chlore ou un groupe alcoxy contenant 1 ou 2 atomes de carbone, $R_2$ et $R_3$ représentent chacun un atome d'hydrogène ou de chlore, un groupe alcoxy contenant 1 ou 2 atomes de carbone, un radical alkyle contenant 1 ou 2 atomes de carbone ou un radical phényle, et x est un nombre entier allant de 4 à 16.

Les fluorosilanes selon l'invention peuvent être obtenus par simple addition radicalaire d'un mercapto-3 propyl silane de formule

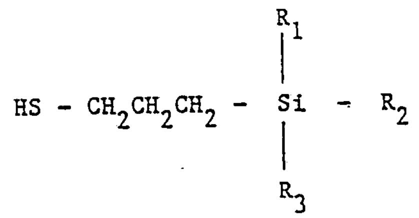

(II)

dans laquelle $R_1$, $R_2$ et $R_3$ ont les mêmes significations que précédemment, sur une oléfine fluorée de formule :

$$C_xF_{2x+1}—CH_2CH_2—O—CH_2—CH = CH_2 \qquad (III)$$

La réaction d'addition peut être réalisée dans un solvant organique aprotique tel que, par exemple, un nitrile comme l'acétonitrile, le butyronitrile et l'isobutyronitrile, un amide comme le diméthylformamide, un éther comme le tétrahydrofurane, un hydrocarbure aromatique comme le benzène ou un hydrocarbure halogéné comme le chloroforme et le tétrachlorure de carbone. On opère généralement à une température comprise entre 30 et 100 °C, de préférence entre 60 et 80 °C environ, et sous balayage d'azote.

Pour initier la réaction, on utilise les amorceurs radicalaires habituels tels que les dérivés diazoïques comme l'azobisisobutyronitrile, les peroxydes comme le peroxyde de benzoyle, les hydroperoxydes comme l'hydroperoxyde de tert-butyle, les percarbonates. La quantité d'amorceur peut varier dans de larges limites et est généralement comprise entre 0,005 et 0,1 mole par mole de thiol mis en œuvre, de préférence entre 0,01 et 0,05 mole.

Les fluorosilanes à pont thioéther selon l'invention sont de précieux intermédiaires pour la fabrication d'élastomères de silicones. Selon le nombre de groupements hydrolysables (atomes de chlore ou groupes alcoxy) fixés sur le silicium, ils peuvent être utilisés soit pour constituer la chaîne du polysiloxane, soit comme agents de transfert ou comme agents de réticulation.

L'exemple suivant illustre l'invention, sans la limiter.

Exemple

Addition du diméthoxy méthyl mercapto-3-propyl silane sur l'allyl tétrahydro-1,1,2,2 perfluoro-octyl éther.

On chauffe pendant quatre heures à 80 °C et sous atmosphère d'azote un mélange comprenant 10 ml d'acétonitrile, $2{,}5.10^{-2}$ mole de l'éther $C_6F_{13}—CH_2CH_2—O—CH_2—CH = CH_2$, $2{,}6.10^{-2}$ mole du silane $(CH_3O)$ $Si—(CH_3)CH_2CH_2CH_2SH$ et $0{,}5.10^{-3}$ mole d'azo bis-isobutyronitrile.

Par distillation du mélange réactionnel, on obtient 12,4 g du produit d'addition :

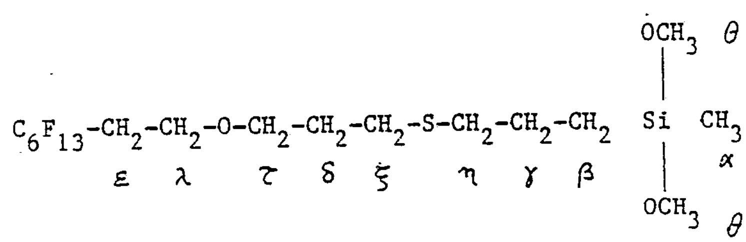

dont le spectre RMN $^1H$ présente les pics suivants :

* à $0.10^{-6}$, le singulet du $CH_3$ α
* à $0{,}62.10^{-6}$, le triplet mal résolu du $CH_2$ β avec les deux H γ
* à $1{,}57.10^{-6}$, un quintuplet du $CH_2$γ avec les quatre protons η et β
* à $1{,}75.10^{-6}$, l'autre quintuplet du $CH_2$ δ avec les quatre protons ξ et τ
* à $2{,}3.10^{-6}$, le triplet détriplé du $CH_2$ ε avec le $CF_2$ et les deux protons λ
* à $2{,}44.10^{-6}$, le triplet du $CH_2$ η avec les deux protons γ
* à $2{,}48.10^{-6}$, le triplet du $CH_2$ ξ avec les deux protons δ

* à 3,4.$10^{-6}$, les six protons des groupes $OCH_3$ θ
* à 3,45.$10^{-6}$, un triplet du $CH_2$ τ avec les deux protons δ
*à 3,6.$10^{-6}$, un triplet du $CH_2$ λ avec les deux protons ε

L'éther allylique fluoré utilisé dans cet exemple peut être préparé de la façon suivante :

Dans un ballon muni d'un réfrigérant et équipé d'une agitation mécanique tournant à 500 tours/min, on maintient à 42 °C pendant 6 heures un mélange comprenant 7,7.$10^{-2}$ mole d'alcool $C_6F_{13}—CH_2CH_2OH$, 80 ml d'une solution de soude à 50 %, 2,6 g d'hydrogénosulfate de tétrabutylammonium et 0,385 mole de chlorure d'allyle. On dilue ensuite le mélange réactionnel avec 20 ml de chlorure de méthylène et le lave plusieurs fois à l'eau. Après évaporation du solvant et distillation du résidu sous vide, on obtient avec un rendement de 95 % l'éther allylique $C_6F_{13}CH_2CH_2—O—CH_2 = CH_2$ qui bout à 76 °C sous 20 torr.

**Revendications** (pour les Etats contractants : BE, CH, DE, FR, GB, IT, LI, LU, NL, SE)

1. Fluorosilanes caractérisés en ce qu'ils répondent à la formule générale :

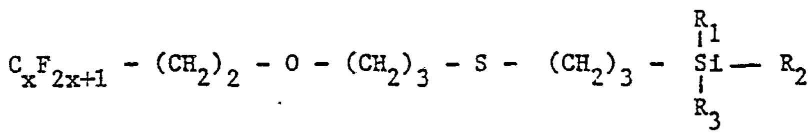

dans laquelle $R_1$ représente un atome de chlore ou un groupe alcoxy contenant 1 ou 2 atomes de carbone, $R_2$ et $R_3$ représentent chacun un atome d'hydrogène ou de chlore, un groupe alcoxy contenant 1 ou 2 atomes de carbone, un radical alkyle contenant 1 ou 2 atomes ce carbone ou un radical phényle, et x est un nombre entier allant de 4 à 16.

2. Fluorosilanes selon la revendication 1, dans lesquels $R_1$ et $R_2$ sont des atomes de chlore ou des groupes méthoxy et $R_3$ est un radical méthyle.

3. Procédé de préparation des fluorosilanes selon la revendication 1, caractérisé en ce qu'il consiste en l'addition radicalaire d'un silane-thiol de formule :

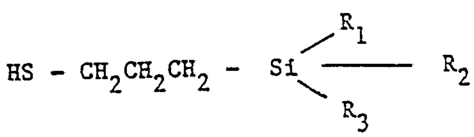

sur une oléfine fluorée de formule :

$$C_xF_{2x+1}—(CH_2)_2—O—CH_2CH = CH_2$$

les symboles $R_1$, $R_2$, $R_3$ et x ayant la même signification que dans la revendication 1.

4. Procédé selon la revendication 3, dans lequel la réaction est effectuée dans un solvant organique aprotique à une température allant de 30 à 100 °C, de préférence entre 60 et 80 °C environ, et sous balayage d'azote.

5. Utilisation des fluorosilanes selon revendication 1 ou 2 pour la fabrication de silicones fluorés.

**Revendications** (pour l'Etat contractant AT)

1. Procédé de préparation de fluorosilanes de formule générale :

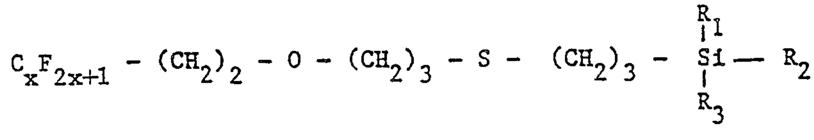

dans laquelle $R_1$ représente un atome de chlore ou un groupe alcoxy contenant 1 ou 2 atomes de carbone, $R_2$ et $R_3$ représentent chacun un atome d'hydrogène ou de chlore, un groupe alcoxy contenant 1 ou 2 atomes de carbone, un radical alkyle contenant 1 ou 2 atomes de carbone ou un radical phényle, et x est un nombre entier allant de 4 à 16, caractérisé en ce qu'il consiste en l'addition radicalaire d'un silane-thiol de formule :

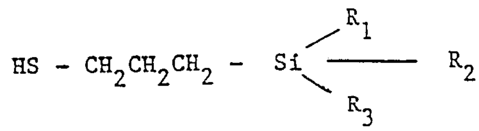

sur une oléfine fluorée de formule :

$$C_xF_{2x+1}—(CH_2)_2—O—CH_2CH=CH_2$$

les symboles $R_1$, $R_2$, $R_3$ et x ayant la même signification que ci-dessus.

2. Procédé selon la revendication 1, dans lequel $R_1$ et $R_2$ sont des atomes de chlore ou des groupes méthoxy et $R_3$ est un radical méthyle.

3. Procédé selon la revendication 1 ou 2, dans lequel la réaction est effectuée dans un solvant organique aprotique à une température allant de 30 à 100 °C, de préférence entre 60 et 80 °C environ, et sous balayage d'azote.

4. Utilisation des fluorosilanes tels que définis dans la revendication 1 ou 2 pour la fabrication de silicones fluorés.

**Claims** (for the Contracting States : BE, CH, DE, FR, GB, IT, LI, LU, NL, SE)

1. Fluorosilanes, characterised in that they correspond to the general formula :

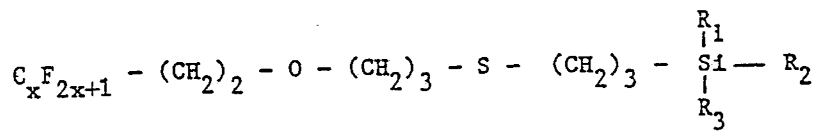 (I)

in which $R_1$ denotes a chlorine atom or an alkoxy group containing 1 or 2 carbon atoms ; $R_2$ and $R_3$ each denote a hydrogen or chlorine atom, an alkoxy group containing 1 or 2 carbon atoms, an alkyl radical containing 1 or 2 carbon atoms or a phenyl radical ; and x is an integer ranging from 4 to 16.

2. Fluorosilanes according to Claim 1, in which $R_1$ and $R_2$ are chlorine atoms or methoxy groups and $R_3$ is a methyl radical.

3. Process for preparing the fluorosilanes according to Claim 1, characterised in that it consists in the free-radical addition of a silane-thiol of formula :

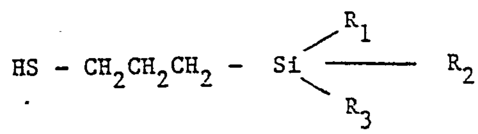 (II)

to a fluorinated olefin of formula :

$$C_xF_{2x+1}—(CH_2)_2—O—CH_2CH=CH_2 .$$

the symbols $R_1$, $R_2$, $R_3$ and x having the same meaning as in Claim 1.

4. Process according to Claim 3, in which the reaction is performed in an aprotic organic solvent at a temperature ranging from 30 to 100 °C, and preferably between approximately 60 and 80 °C, and with the reactor swept with nitrogen.

5. Use of the fluorosilanes according to Claim 1 or 2 for the manufacture of fluorinated silicones.

**Claims** (for the Contracting State AT)

1. Process for preparing the fluorosilanes of general formula :

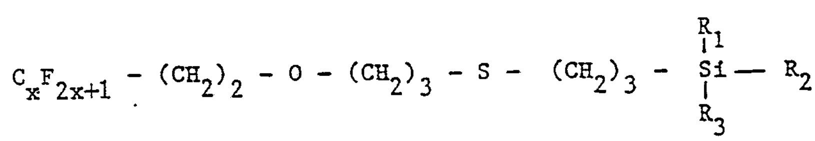 (II)

in which $R_1$ denotes a chlorine atom or an alkoxy group containing 1 or 2 carbon atoms ; $R_2$ and $R_3$ each

denote a hydrogen or chlorine atom, an alkoxy group containing 1 or 2 carbon atoms, an alkyl radical containing 1 or 2 carbon atoms, or a phenyl radical and x is an integer ranging from 4 to 16, characterised in that it consists in the free-radical addition of a silane-thiol of formula :

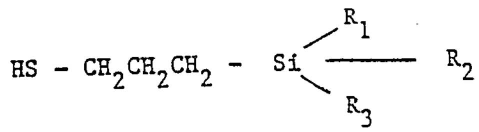

to a fluorinated olefin of formula :

$$C_xF_{2x+1}-(CH_2)_2-O-CH_2CH=CH_2$$

the symbols $R_1$, $R_2$, $R_3$ and x having the same meaning as above.

2. Process according to Claim 1, in which $R_1$ and $R_2$ are chlorine atoms or methoxy groups and $R_3$ is a methyl radical.

3. Process according to Claim 1 or 2, in which the reaction is performed in an aprotic organic solvent at a temperature ranging from 30 to 100 °C, and preferably between approximately 60 and 80 °C, and with the reactor swept with nitrogen.

4. Use of the fluorosilanes as defined in Claim 1 to 2 for the manufacture of fluorinated silicones.

**Patentansprüche** (für die Vertragsstaaten : BE, CH, DE, FR, GB, IT, LI, LU, NL, SE)

1. Fluorsilane, dadurch gekennzeichnet, daß sie der allgemeinen Formel

$$C_xF_{2x+1}-(CH_2)_2-O-(CH_2)_3-S-(CH_2)_3-\overset{\displaystyle R_1}{\underset{\displaystyle R_3}{Si}}-R_2$$

genügen, in der $R_1$ ein Chloratom oder eine Alcoxygruppe mit 1 oder 2 Kohlenstoffatomen darstellt, $R_2$ und $R_3$ jeweils ein Wasserstoff- oder Chloratom, eine Alcoxygruppe mit 1 oder 2 Kohlenstoffatomen, ein Alkylradikal mit 1 oder 2 Kohlenstoffatomen oder ein Phenylradikal darstellen und x eine ganze Zahl zwischen 4 und 16 ist.

2. Fluorsilane nach Patentanspruch 1, in denen $R_1$ und $R_2$ Chloratome oder Methoxygruppen und $R_3$ ein Methylradikal darstellen.

3. Verfahren zur Herstellung von Fluorsilanen nach Patentanspruch 1, dadurch gekennzeichnet, daß es in der Radikaladdition eines Silanthiols der Formel

$$HS-CH_2CH_2CH_2-\overset{\displaystyle R_1}{\underset{\displaystyle R_3}{Si}}-R_2$$

an ein fluoriertes Alken der Formel

$$C_xF_{2x+1}-(CH_2)_2-O-CH_2CH=CH_2$$

besteht, wobei die Symbole $R_1$, $R_2$, $R_3$ und x dieselbe Bedeutung haben, wie im Patentanspruch 1.

4. Verfahren nach Patentanspruch 3, in dem die Reaktion in einem aprotischen, organischen Lösungsmittel bei einer Temperatur zwischen 30 und 100 °C, vorzugsweise zwischen ungefähr 60 und 80 °C und unter Stickstoffspülung stattfindet.

5. Verwendung der Fluorsilane nach Patentanspruch 1 oder 2 zur Herstellung von fluorierten Siliconen.

**Patentansprüche** (für den Vertragsstaat AT)

1. Verfahren zur Herstellung von Fluorsilanen mit der allgemeinen Formel

$$C_xF_{2x+1}-(CH_2)_2-O-(CH_2)_3-S-(CH_2)_3-\overset{\displaystyle R_1}{\underset{\displaystyle R_3}{Si}}-R_2$$

in der $R_1$ ein Chloratom oder eine Alcoxygruppe mit 1 oder 2 Kohlenstoffatomen darstellt, $R_2$ und $R_3$ jeweils ein Wasserstoff- oder Chloratom, eine Alcoxygruppe mit 1 oder 2 Kohlenstoffatomen, ein Alkylradikal mit 1 oder 2 Kohlenstoffatomen oder ein Phenylradikal darstellen und x eine ganze Zahl zwischen 4 und 16 ist, dadurch gekennzeichnet, daß es in der Radikaladdition eines Silanthiols der Formel

$$HS - CH_2CH_2CH_2 - \overset{\displaystyle R_1}{\underset{\displaystyle R_3}{\overset{|}{\underset{|}{Si}}}} - R_2$$

an ein fluoriertes Alken der Formel

$$C_xF_{2x+1}—(CH_2)_2—O—CH_2CH = CH_2$$

besteht, wobei die Symbole $R_1$, $R_2$, $R_3$ und x dieselbe Bedeutung haben wie oben.

2. Verfahren nach Patentanspruch 1, in dem $R_1$ und $R_2$ Chloratome oder Methoxygruppen und $R_3$ ein Methylradikal darstellen.

3. Verfahren nach Patentanspruch 1 oder 2, in dem die Reaktion in einem aprotischen, organischen Lösungsmittel bei einer Temperatur zwischen 30 und 100 °C, vorzugsweise zwischen ungefähr 60 und 80 °C und unter Stickstoffspülung stattfindet.

4. Verwendung der Fluorsilane, wie sie in Patentanspruch 1 oder 2 definiert werden, zur Herstellung von fluorierten Siliconen.